# EUROPEAN PATENT APPLICATION

(11) **EP 2 736 205 A1**
(43) Date of publication of application: **28.05.2014**
(21) Application number: 12306452.9
(22) Date of filing: 22.11.2012
(51) Int. Cl.: H04L 12/841, H04L 12/875, H04L 12/863, H04L 12/833

(54) **Apparatus and method for forwarding packets or messages**

(71) Applicant: Alcatel Lucent, 75007 Paris (FR)
(72) Inventor: Dobbelaere, Philippe, 2520 Ranst (BE)
(74) Representative: D'Halleweyn, Nele Veerle Trees Gertrudis

(57) **Abstract**

Network apparatus, typically a router or a forwarder, adapted to receive and forward packets or messages, comprising a processor adapted to derive a time indication from a received packet or message, said time indication being a valid-from time indicating from when the packet or message is valid and/or a valid-until time indicating until when the packet or message is valid; and to determine whether and/or when to forward the received packet or message based on the derived time indication.

## Description

The present invention relates to network apparatuses and methods for forwarding packets or messages, and in particular but not exclusively to routers or forwarders for use in an IP based network.

Routers and packet forwarders currently can only prioritise packets based on stream classification and associated QOS/priority attributes. Further, existing SMS message scheduling systems do not allow for an efficient prioritizing and forwarding of messages.

The object of embodiments of the invention is to provide an improved network apparatus and method for prioritising and forwarding packets or messages in a network node.

According to an aspect of the invention there is provided a network apparatus, typically a router or a forwarder, adapted to receive and forward packets or messages, comprising a processor adapted to derive a time indication from a received packet or message, said time indication being a valid-from time indicating from when the packet or message is valid and/or a valid-until time indicating until when the packet or message is valid, and adapted to determine whether and/or when to forward the received packet or message based on the derived time indication.

The network apparatus is in particular a store and forward network apparatus, typically called a router or forwarder when packets are forwarded, and a forwarder or gateway when messages such as SMS messages are forwarded. Embodiments of the invention are applicable for forwarding packets, but also for forwarding messages such as SMS messages or pager (beeper) messages.

In the context of the present application "validity" of a packet or message refers to the time where the packet or message is useful at the destination of the packet or message. For completeness it is noted that it is known to include a lifetime in IP packets in order to detect routing loops. However this time indication is not an indication of the validity time of the packet but a way to detect routing loops.

According to an aspect of the invention a time indication or time range indicating the urgency is added into each packet, so that forwarding priority can be determined based on the urgency of the information contained in the packet. As a consequence, e.g. packets with a starting validity in the future can remain queued, and packets with an ending validity in the past can be discarded from the system. Of course, the skilled person understands that if the load of the network apparatus is quite low, also packets with a starting validity in the future may be forwarded, whilst in case of so-called bursts those packets will be typically queued.

If IP is used, the IP options field could be used to carry this additional time information. Using the IP options field has the advantage that such a packet will also pass through a router or forwarder which does not recognise the IP options and will simply ignore them. Information about the IP options field can be found in RFC1812, section 4.2.2.1 entitled "Options" and in RFC791, section 3.1. entitled "Internet Header Format".

Preferably the processor is adapted to drop a received packet or message if the time indication indicates the valid-until time, and the valid-until time lies in the past. Note that it is also possible to further take into account the destination. The processor could then be adapted to drop a received packet or message if the destination cannot be reached before the valid-until time, which may also be the case if the valid-until time lies in the near future. The processor may be further adapted to send a notification message to the source that sent the received packet or message to notify the source that the packet or message has been dropped.

Embodiments of the invention preferably guarantee that no network resources and associated energy are used to transport data that is not valid anymore. By using embodiments of a processor according to the invention bursts can be better dealt with, which will allow better throughput with an infrastructure that consumes less resources since it suffers less from high fluctuations between low and high load. Using embodiments of the invention, shapers that have available bandwidth may forward a packet before the time indication indicates the need to do so with the intention to be capable to better deal with later bursts of arriving packets with similar time indications. This is especially advantageous on network links with low sustainable bandwidth such as wireless cells.

Preferably the processor is adapted to receive a series of received packets or messages each having a valid-from time, and to sort said series of received packets or messages based on the valid-from times thereof.

The processor typically takes the form of an output shaper, i.e. a device for shaping the received packets or messages and placing them in an output queue based on decisions taken by the output shaper.

Preferably the network apparatus is adapted to wirelessly receive packets or messages and preferably the network apparatus is adapted to operate in an IP network. More general, embodiments of the invention are advantageous in a network apparatus of a network with medium access control and physically limited peak bandwidth.

According to a preferred embodiment the processor is further adapted to take into account a priority class of a received packet or message when determining when to forward the packet. In that way the time validity based priority may be combined with a traditional concept of priority, e.g. based on flow classification and associated priority classes. Further it may be combined with path computation mechanisms. It is noted that the time validity prioritizing mechanism of embodiments of the invention may be implemented in the forwarding engine fast path which isable to process incoming packets at wire speed, since the mechanism does not require complicated sorting computations.

According to a preferred embodiment the network apparatus comprises a clock, and is adapted to synchronise the clock with an external clock used to generate the time indication included in the packets or messages received at the network apparatus.

According to another aspect of the invention there is provided a method for receiving and forwarding packets or messages, comprising: receiving a packet or message and deriving a time indication from the received packet or message, said time indication being a valid-from time indicating from when the packet or message is valid and/or a valid-until time indicating until when the packet or message is valid; and determining when to forward the received packet or message based on the derived time indication.

Preferably the method comprises dropping a received packet or message if the time indication indicates the valid-until time, and the valid-until time lays in the past.

Preferably the method comprises receiving a series of received packets or messages each having a valid-from time, and sorting and forwarding said series of received packets or messages based on the valid-from times thereof.

According to yet another aspect of the invention the method comprises selecting a network path for sending the packet or message to a destination taking into account the valid-from and/or valid-until time of received packets for that destination. Such an embodiment will allow to select e.g. a longer or slower but cheaper path for a particular destination if the valid-until time is in the far future, and to select e.g. a fast but more expensive path if the packet or message is urgent.

The invention also relates to a method for creating packets or messages to be sent from a source to a destination through a network, typically an IP network, via a plurality of network apparatuses such as routers and forwarders, comprising including a time indication in a packet, said time indication being a valid-from time indicating from when the packet or message is valid and/or a valid-until time indicating until when the packet or message is valid. Preferably the time indication is included using the IP options field.

Embodiments of the invention further relate to a digital data storage product or computer readable medium encoding a program in machine-readable and machine-executable form, said program being adapted, when run on a computer, to perform an embodiment of the method as disclosed above. Further embodiments relate to a computer and/or other hardware device programmed to perform the steps of an embodiment of the method of the invention.

According to embodiments of the invention, by adding a valid-from and/or valid-until timestamp in each packet, it is ensured that forwarding equipment along the route from source to destination can make priority and (de-)queuing decisions based on that information. Valid-from could e.g. be used to broadcast an event that is scheduled to happen in the future. If that future is relatively distant, forwarding equipment could give priority to more urgent messages when forwarding. Valid-to could e.g. be used to broadcast an event that will cease to exist at a foreseen time. If a forwarding system was not able to forward the packet before that time, it can as well be discarded since delivery of the information would not be valuable anymore and should not steal network resources from potentially more important messages.

According to embodiments of the invention the priority of a message is in fact changing dynamically over time, based on the message validity time range or time indication. E.g. if the clock time approaches a validity start of a message, this message would rise in priority and hence have more chance of being forwarded. Priority could keep rising until clock time reaches a validity end, at which time the message would dramatically drop in priority and potentially even be purged from the system without forwarding, typically if the system/ forwarding link is fully loaded.

Embodiments of the invention are especially but not exclusively valuable in vertical markets and sensor/control environments, such as traffic applications, where actions typically need to happen at a very specific time. By using a valid-from time indication and/or a valid-until time indication, priority can be given to packets that need to be delivered in the near future. Embodiments of the invention using validity based priority are also a good way to support isochronous services, where packets are essentially tied to a fixed clock rate and late packets cannot be used anymore at the receiver, so that they may as well be discarded as soon as possible in the forwarding path to free up resources for future packets.

More in general, embodiments of the invention using time validity based shaping can significantly reduce the difference between peak load and minimum load, allowing for a much better provisioning of the network.

The accompanying drawings are used to illustrate presently preferred non-limiting exemplary embodiments of the present invention. The above and other advantages, features and objects of the invention will become more apparent, and the invention will be better understood from the following detailed description when read in conjunction with the accompanying drawings, in which:
Figures 1A and 1B are schematic graphs illustrating how packets may move through a network router or packet forwarder according to an embodiment of the method of the invention;
Figure 2 is a flowchart illustrating an embodiment of the method of the invention;
Figure 3 is a schematic diagram of an exemplary embodiment of a network apparatus of the invention.

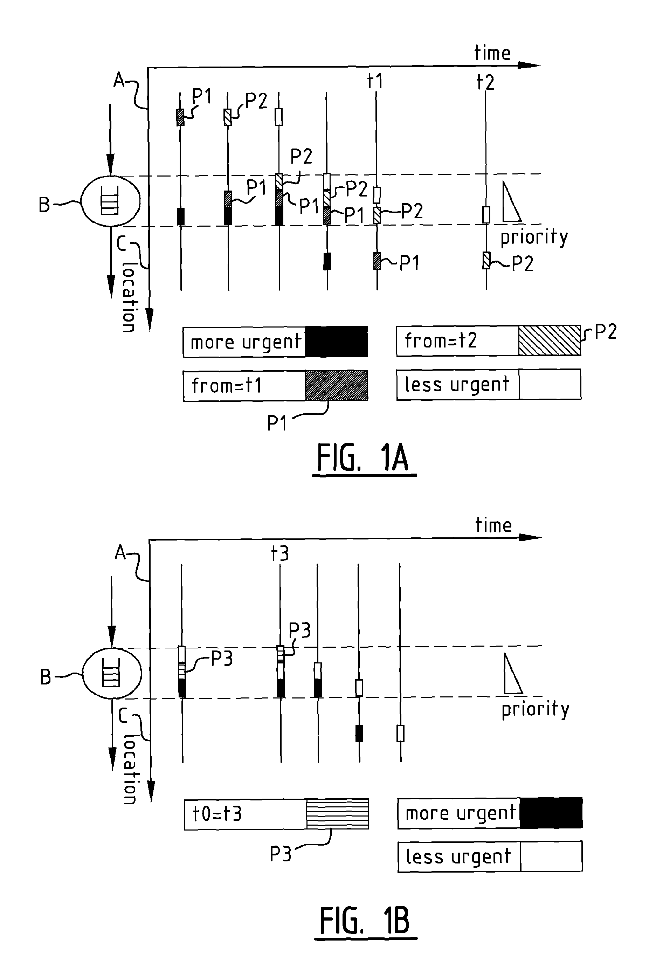

Figure 1A illustrates how packets move through a network system in function of time, wherein the time increases from left to right, and the vertical axis is a measure for the position in system. In the illustrated example packets move from location A to a network apparatus at location B from where the packets are forwarded to a location C. In the network apparatus there is a queue of sorted packets, wherein the sorting is such that the top of queue is low priority, and the bottom of queue is high priority.

A packet P1 with validity starting at t1 is preferably sent out of the queue no later than t1, and a packet P2 with validity starting at t2 is preferably sent out of the queue no later than t2. When multiple packets are queued, they are sorted based on their priority. In the illustrated example the packet P1 with valid-from time t1 arrives in the network apparatus before the packet P2 with valid-from time t2, and the packet with valid-from time t1 is forwarded before the packet with valid-from time t2. However if the packet P2 with valid-from time t2 were to arrive in the network apparatus before the packet P1 with valid-from time t1, then the order would be swapped, and the packet with valid-from time t1 would be forwarded before the packet with valid-from time t2, assuming that P1 and P2 belong to the same priority class and that there are no other reasons for giving priority to P2.

Figure 1B illustrates an example of a method of the invention where a valid-until time is included in a packet, i.e. when a time range end is included. The packet P3 with expiration at t3 is queued in the network apparatus at location B before t3. At time t3, the packet P3 still did not get the chance to be sent out due to higher priority traffic monopolizing the output link. As a consequence, the packet P3 is just removed from the queue at t3, i.e. the packet P3 is dropped. If required, a message could be sent upstream at that time to notify the source of the information that this packet P3 has been discarded, and the discard events can also be locally counted for maintenance purposes.

Obviously, combinations of the example of figures 1A and 1B based on both start and end values for the validity time of a packet can be handled in a similar fashion.

Typically an output rate shaper in the network apparatus makes a decision to send the packets not only based the valid-from times (t1 and t2) or the valid-until times (t3), but also based on e.g. their sort order, the priority class, the occupancy of the link/queue at that moment and the configured shaping behaviour. Output rate shaper may use AVL tree or red/black tree data structures to do the sorting, but the skilled person understands that other mechanisms or algorithms are also possible.

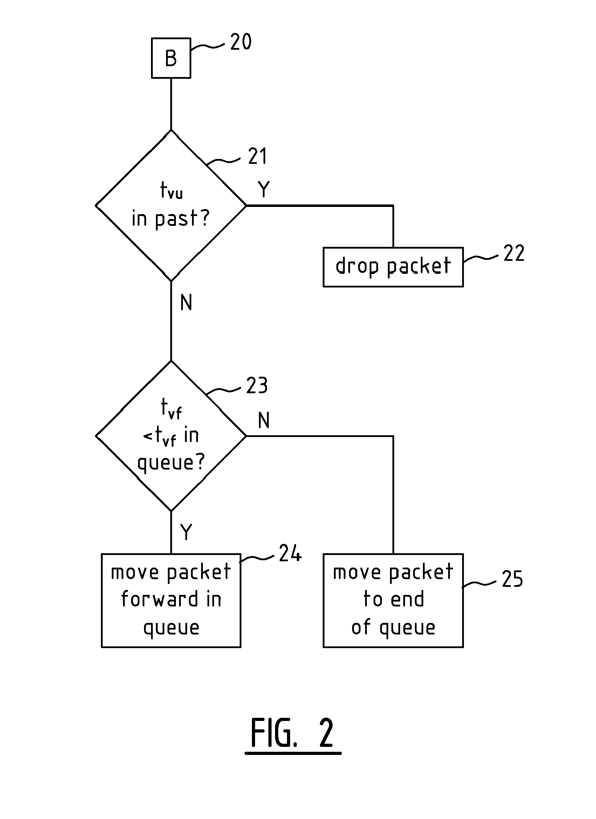

Figure 2 illustrates an embodiment of a method for receiving and forwarding packets or messages according to the invention. It is assumed that a packet or message is received including a valid-from time tvf indicating from when the packet or message is valid and a valid-until time tvu indicating until when the packet or message is valid, and that those times are extracted from the received packet or message. In step 21 it is verified if the valid-until time tvu lies in the past. If yes, the packet or message is dropped, see step 22. In this condition is not fulfilled, the method proceeds with step 23 where it is verified if the valid-from time tvf is earlier in time than the valid-from time tvf of a packet that was received before and that is waiting in the queue. If this condition is fulfilled the packet will not be added at the end of the queue but will be moved forward before the packet with the later valid-from time, see step 24. If this condition is not fulfilled the packet or message is moved to the end of the queue, see step 25. Note that this is a simple example where the sorting is done purely on the basis of valid-from/valid-until times. The skilled person understands that this method may be combined with other prioritising concepts.

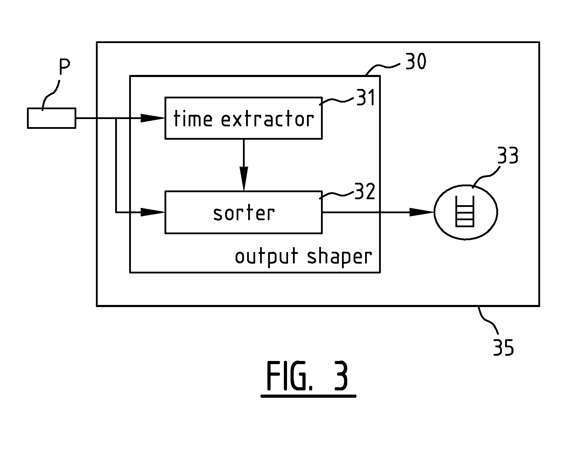

Figure 3 illustrates schematically a network apparatus 35 comprising an output shaper 30 comprising a time extractor 31 adapted to derive a time indication from a received packet or message, said time indication being e.g. a valid-from time indicating from when the packet or message is valid and/or a valid-until time indicating until when the packet or message is valid; and a sorter adapted to determine whether and/or when to forward the received packet or message based on the derived time indication. The apparatus further comprises a storage means 33 for storing the packets or messages in a forwarding order.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

While the principles of the invention have been set out above in connection with specific embodiments, it is to be clearly understood that this description is merely made by way of example and not as a limitation of the scope of protection, which is determined by the appended claims.

## Claims

1. Network apparatus, typically a router or a forwarder, adapted to receive and forward packets or messages, comprising a processor adapted
- to derive a time indication from a received packet or message, said time indication being a valid-from time indicating from when the packet or message is valid and/or a valid-until time indicating until when the packet or message is valid; and
- to determine whether and/or when to forward the received packet or message based on the derived time indication.

2. Network apparatus of claim 1, wherein the processor is adapted to drop a received packet or message if the time indication indicates the valid-until time, and the valid-until time lies in the past.

3. Network apparatus of claim 2, wherein the processor is adapted to send a notification message to a source from which the received packet or message was received, in order to notify the source that the packet or message has been dropped.

4. Network apparatus of any one of the previous claims, wherein the processor is adapted to receive a series of received packets or messages each having a valid-from time, and to sort said series of received packets or messages based on the valid-from times thereof.

5. Network apparatus of any one of the previous claims, wherein the network apparatus is adapted to be placed in a network with medium access control and physically limited peak bandwidth.

6. Network apparatus of any one of the previous claims, wherein the network apparatus is adapted to operate in an IP network.

7. Network apparatus of any one of the previous claims, wherein the processor is further adapted to take into account a priority class of a received packet or message when determining when to forward the packet.

8. Network apparatus of any one of the previous claims, further comprising a clock, said network apparatus being adapted to synchronise the clock with an external clock used to generate the time indication included in the packets or messages received at the network apparatus.

9. Method for receiving and forwarding packets or messages, comprising:
receiving a packet or message and deriving a time indication from the received packet or message, said time indication being a valid-from time indicating from when the packet or
message is valid and/or a valid-until time indicating until when the packet or message is valid; and
determining when to forward the received packet or message based on the derived time indication.

10. Method of claim 9, comprising dropping a received packet or message if the time indication indicates the valid-until time, and the valid-until time lays in the past.

11. Method of claim 9 or 10, comprising receiving a series of received packets or messages each having a valid-from time, and sorting and forwarding said series of received packets or messages based on the valid-from times thereof.

12. Method of any one of the claims 9-12, comprising computing a network path for sending the packet or message to a destination.

13. Digital data storage product or computer readable medium encoding a program in machine-readable and machine-executable form, said program being adapted, when run on a computer, to perform the method of any one of the claims 9-12.

14. Method for creating packets or messages to be sent from a source to a destination through a network, typically an IP network, via a plurality of network apparatuses, comprising including a time indication in a packet, said time indication being a valid-from time indicating from when the packet or message is valid and/or a valid-until time indicating until when the packet or message is valid.

15. Method of claim 14, wherein the time indication is included in an IP options field of the packet.

## Amended claims

### Amended claims in accordance with Rule 137(2) EPC.

**1.** Network apparatus (35), typically a router or a forwarder, adapted to receive and forward packets (P) or messages, comprising a processor (30) adapted
- to derive (31) a time indication from a received packet or message; and
- to determine (32) whether and/or when to forward the received packet or message based on the derived time indication, **characterized in that** said time indication comprises a valid-from time indicating from when the packet or message is valid and a valid-until time indicating until when the packet or message is valid.

**2.** Network apparatus of claim 1, wherein the processor is adapted to drop (22) a received packet or message if the time indication indicates the valid-until time, and the valid-until time lies in the past (21).

**3.** Network apparatus of claim 2, wherein the processor is adapted to send a notification message to a source from which the received packet or message was received, in order to notify the source that the packet or message has been dropped.

**4.** Network apparatus of any one of the previous claims, wherein the processor is adapted to receive a series of received packets or messages each having a valid-from time, and to sort said series of received packets or messages based on the valid-from times thereof (23-25).

**5.** Network apparatus of any one of the previous claims, wherein the network apparatus is adapted to be placed in a network with medium access control and physically limited peak bandwidth.

**6.** Network apparatus of any one of the previous claims, wherein the network apparatus is adapted to operate in an IP network.

**7.** Network apparatus of any one of the previous claims, wherein the processor is further adapted to take into account a priority class of a received packet or message when determining when to forward the packet.

**8.** Network apparatus of any one of the previous claims, further comprising a clock, said network apparatus being adapted to synchronise the clock with an external clock used to generate the time indication included in the packets or messages received at the network apparatus.

**9.** Method for receiving and forwarding packets (P) or messages, comprising:
receiving a packet or message and deriving (31) a time indication from the received packet or message; and
determining (32) when to forward the received packet or message based on the derived time indication; **characterized in that** said time indication comprises a valid-from time indicating from when the packet or message is valid and a valid-until time indicating until when the packet or message is valid.

**10.** Method of claim 9, comprising dropping a received packet or message if the time indication indicates the valid-until time, and the valid-until time lies in the past.

**11.** Method of claim 9 or 10, comprising receiving a series of received packets or messages each having a valid-from time, and sorting and forwarding said series of received packets or messages based on the valid-from times thereof.

**12.** Method of any one of the claims 9-11, comprising computing a network path for sending the packet or message to a destination.

**13.** Digital data storage product or computer readable medium encoding a program in machine-readable and machine-executable form, said program being adapted, when run on a computer, to perform the method of any one of the claims 9-12.

**14.** Method for creating packets or messages to be sent from a source to a destination through a network, typically an IP network, via a plurality of network apparatuses (35), **characterized by** comprising including a time indication in a packet, said time indication being a valid-from time indicating from when the packet or message is valid and a valid-until time indicating until when the packet or message is valid.

**15.** Method of claim 14, wherein the time indication is included in an IP options field of the packet.
